# DEMANDE DE BREVET EUROPEEN

(11) **EP 2 372 346 A1**
(43) Date de publication de la demande: **05.10.2011**
(21) Numéro de dépôt: 11305135.3
(22) Date de dépôt: 10.02.2011
(51) Int. Cl.: G01N 21/53

(54) **Machine et un procede de controle de spray pour chaine de montage de dispositifs de pulverisation de produit fluide.**

(30) Priorité: 10.02.2010 FR 1050923
(71) Demandeur: Valois SAS, 27110 Le Neubourg (FR)
(72) Inventeur: Beaujour, Wilfrid, 76160, DARNETAL (FR); Langeard, Jérôme, 76230, BOIS GUILLAUME (FR); Leloup, Guy, 76410, SAINT AUBIN LES ELBEUF (FR); Williams, Gerallt, 27400, VIRONVAY (FR)
(74) Mandataire: CAPRI

(57) **Abrégé**

Machine (10) de contrôle de spray pour chaîne de montage de dispositif de pulvérisation de produit fluide (20), comportant un support (11) recevant au moins un dispositif de pulvérisation de produit fluide (20), un système d'actionnement (12) pour actionner un dispositif de pulvérisation de produit fluide (20) dudit support (11) et créer un spray de produit fluide, des moyens de détermination (14, 15) pour déterminer des paramètres réels dudit spray créé par ledit système d'actionnement, et des moyens d'analyse desdits paramètres réels, lesdits moyens d'analyse comparant lesdits paramètres réels avec des paramètres prédéterminés, lesdits moyens d'analyse déterminant des paramètres de forme géométrique de spray et/ou de tailles de particules et/ou de densité de particules et/ou de distribution de tailles de particules et/ou de vitesse de particules.

## Description

La présente invention concerne une machine et un procédé de contrôle de spray pour chaîne de montage de dispositifs de pulvérisation de produit fluide.

Les dispositifs de pulvérisation de produit fluide sont bien connus, et sont notamment utilisés dans le domaine de la parfumerie, de la cosmétique et de la pharmacie. En particulier dans des applications de pulvérisation nasale, dans le domaine pharmaceutique, l'efficacité thérapeutique du produit fluide pulvérisé peut dépendre des propriétés du spray généré lors de l'actionnement du dispositif. De manière connue, à la fin de la chaîne de montage, c'est-à-dire lorsque le dispositif de pulvérisation est assemblé, et juste avant d'être expédié chez le fabriquant du produit fluide pour y être assemblé sur un réservoir correspondant, un certain nombre d'échantillons de dispositifs assemblés sont testés en laboratoire pour vérifier si les propriétés du spray correspondent au cahier des charges prédéfini. L'inconvénient de cette méthode est que non seulement elle prend du temps mais que surtout elle ne permet pas d'agir sur la chaîne de montage lorsqu'un défaut est détecté, puisque la totalité des dispositifs de pulvérisation du lot à partir duquel l'échantillon a été testé ont déjà été assemblés. Les documents JP 52 119511 et WO 2008/060484 décrivent des procédés de tests de ce type.

La présente invention a pour but de surmonter les inconvénients susmentionnés.

En particulier, la présente invention a pour but de fournir une machine et un procédé de contrôle de spray qui peut être utilisée sur la chaîne de montage de dispositifs de pulvérisation de produit fluide.

Plus particulièrement, la présente invention a pour but de fournir une telle machine et un tel procédé qui permet de rapidement détecter si le spray correspond au niveau de certains de ces paramètres à des paramètres prédéfinis, et d'alerter le personnel responsable de la chaîne de montage lorsqu'un dispositif défectueux est détecté.

La présente invention a aussi pour but de fournir une telle machine et un tel procédé de contrôle de spray qui soit simple et peu coûteux à fabriquer et à utiliser et à assembler.

La présente invention a donc pour objet une machine de contrôle de spray pour chaîne de montage de dispositif de pulvérisation de produit fluide, comportant un support recevant au moins un dispositif de pulvérisation de produit fluide prélevé directement sur la chaîne de montage, un système d'actionnement pour actionner un dispositif de pulvérisation de produit fluide dudit support et créer un spray de produit fluide, des moyens de détermination pour déterminer des paramètres réels dudit spray créé par ledit système d'actionnement, et des moyens d'analyse desdits paramètres réels, lesdits moyens d'analyse comparant lesdits paramètres réels avec des paramètres prédéterminés, lesdits moyens d'analyse déterminant des paramètres de forme géométrique de spray et/ou de tailles de particules et/ou de densité de particules et/ou de distribution de tailles de particules et/ou de vitesse de particules.

Avantageusement, ledit support reçoit une pluralité de dispositifs de pulvérisation de produit fluide, ledit support étant déplaçable par rapport audit système d'actionnement pour amener successivement lesdits dispositifs de pulvérisation de produit fluide dans ledit système d'actionnement.

Avantageusement, lesdits moyens de détermination comportent un dispositif laser adapté à traverser ledit spray pour former une tranche de spray et une caméra vidéo pour visualiser ladite tranche de spray.

Avantageusement, ledit système d'actionnement comporte une partie supérieure et une partie inférieure déplaçables l'une par rapport à l'autre pour réaliser l'actionnement du dispositif de pulvérisation de produit fluide et ainsi créer un spray.

Avantageusement, ladite partie inférieure coopère avec un réservoir et ladite partie supérieure coopère avec une tête de distribution dudit dispositif de pulvérisation de produit fluide.

Avantageusement, lesdits moyens de détermination sont programmables.

Avantageusement, ladite caméra vidéo affiche au moins 100 images par seconde, avantageusement au moins 500 images par seconde.

Avantageusement, des moyens de confinement de spray sont prévus pour recevoir le spray généré à chaque actionnement.

Avantageusement, lesdits moyens de confinement comportent une enceinte et une cheminée associée à des moyens de génération de vide, ladite cheminée étant disposée au-dessus et/ou sur le coté du dispositif de pulvérisation actionné par la machine.

La présente invention a également pour objet un procédé de contrôle de spray pour chaîne de montage de dispositif de pulvérisation de produit fluide, comportant les étapes suivantes : prélever au moins un dispositif de pulvérisation assemblé directement de ladite chaîne de montage, installer ledit au moins un dispositif de pulvérisation prélevé sur un support, utiliser un système d'actionnement pour actionner ledit dispositif de pulvérisation prélevé et ainsi générer un spray, déterminer des paramètres réels dudit spray généré, et comparer lesdits paramètres réels avec des paramètres prédéterminés, lesdits paramètres réels comprenant la forme géométrique de spray et/ou les tailles de particules et/ou les densités de particules et/ou les distributions de tailles de particules et/ou les vitesses de particules.

Avantageusement, après l'étape de prélever au moins un dispositif de pulvérisation assemblé de la chaîne de montage et avant l'étape d'installer le dispositif de pulvérisation prélevé sur le support, ledit dispositif de pulvérisation est fixé sur un réservoir contenant un produit fluide à pulvériser.

Avantageusement, ledit produit fluide à pulvériser est de l'eau, de l'alcool ou un mélange d'eau et d'alcool.

Avantageusement, l'étape de déterminer des paramètres réels du spray généré est réalisée avec un dispositif laser adapté à former une tranche de spray et une caméra vidéo adaptée à visualiser ladite tranche de spray.

Avantageusement, l'étape de déterminer des paramètres réels du spray généré comprend de déterminer avec un logiciel et à partir de ladite tranche de spray visualisée des paramètres de forme géométrique de spray et/ou des paramètres de taille de particules et/ou des paramètres de densité de particules et/ou des paramètres de distribution de tailles de particules et/ou des paramètres de vitesse de particules.

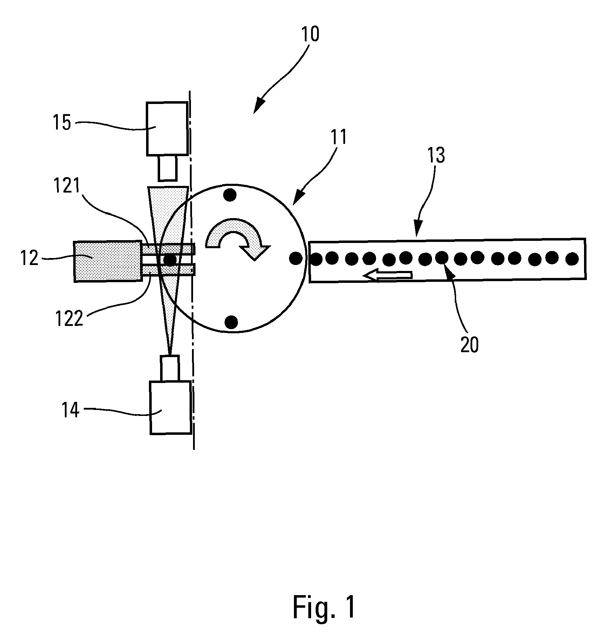

Ces caractéristiques et avantages et d'autres de la présente invention apparaîtront plus clairement au cours de la description détaillée suivante, faite en référence à un mode de réalisation particulier de celle-ci, tel que représenté sur les dessins joints, sur lesquels la figure 1 représente schématiquement en perspective une machine de contrôle de spray selon un mode de réalisation avantageux de la présente invention.

Selon l'invention, il est fourni un procédé de contrôle de spray utilisable sur une chaîne de montage ou d'assemblage de dispositifs de pulvérisation de produit fluide. Une machine permettant de réaliser un tel procédé sera également décrite ultérieurement.

Par dispositif de pulvérisation de produit fluide, on entend en particulier un organe de distribution, tel qu'une pompe ou une valve, avec ou sans tube plongeur, associé à une tête de pulvérisation pourvue d'un orifice de pulvérisation. Un tel dispositif de pulvérisation, une fois assemblé, est généralement livré au fabricant de produit fluide qui va l'assembler sur un réservoir contenant le produit fluide à pulvériser. Dans certains cas toutefois, l'assemblage du dispositif de pulvérisation sur le réservoir peut aussi être réalisé dans la même usine qui a réalisée l'assemblage du dispositif de pulvérisation.

Le procédé selon l'invention prévoit de prélever au moins un dispositif de pulvérisation directement à partir de la chaîne de montage, après son assemblage, et d'installer ce dispositif prélevé sur un support, d'actionner ledit dispositif de pulvérisation prélevé pour générer un spray au moyen d'un système d'actionnement, de déterminer un ou plusieurs paramètre(s) réel(s) dudit spray généré et finalement de comparer ces paramètres réels avec des paramètres prédéterminés, pour vérifier si le spray tel que généré par le système d'actionnement est ou non conforme à un cahier des charges prédéfini. Avantageusement, après l'étape de prélever le dispositif de pulvérisation assemblé et avant l'étape de l'installer sur le support, le dispositif de pulvérisation est fixé sur un réservoir contenant un produit fluide à distribuer. De préférence, pour réaliser les contrôles de spray, ce produit fluide à pulvériser peut être de l'eau. En variante, on peut aussi utiliser de l'alcool, un mélange d'eau et d'alcool ou tout autre produit fluide approprié. Lorsque le spray est généré, des moyens de détermination sont prévus pour déterminer des paramètres réels du spray généré. Ces moyens de détermination peuvent comporter par exemple un dispositif laser pour créer un rayon laser qui traverse le spray au moment où celui-ci est généré et une caméra vidéo qui permet de visualiser la tranche de spray formée par ledit rayon laser traversant le spray. Un logiciel approprié associé à un ordinateur permet alors de déterminer des paramètres réels à partir de ladite tranche de spray visualisée par ladite caméra vidéo, et notamment des paramètres de forme géométrique dudit spray, et/ou des paramètres de taille de particules, et/ou des paramètres de densité de particules, et/ou des paramètres de distribution de tailles de particules et/ou des paramètres de vitesse de particules. D'autres paramètres peuvent aussi être déterminés si nécessaire. Ces paramètres sont ensuite comparés à des paramètres prédéfinis, et ainsi le logiciel peut déterminer si le spray correspond aux spécifications préétablies. Une indication ou une alerte peut être donnée aux responsables, contrôleurs et/ou utilisateurs de la chaîne de montage pour les informer si le dispositif de pulvérisation qui a été testé est conforme ou non conforme. Par exemple, une lumière peut s'allumer en vert lorsque le test est positif et en rouge lorsqu'il est négatif. Un rapport de test peut également être réalisé pour chacun des échantillons testés et ce rapport peut être archivé ensemble avec les images de la caméra vidéo et les différents paramètres détectés et comparés.

La figure 1 représente schématiquement une machine selon un mode de réalisation avantageux de l'invention. Cette machine 10 de contrôle de spray est avantageusement disposée à proximité de la chaîne de montage, de sorte qu'un utilisateur peut prélever un ou plusieurs dispositif(s) de pulvérisation à tester directement à partir de la chaîne de montage et directement les installer dans la machine de contrôle 10. Eventuellement, on peut prévoir des moyens de chargement automatique si la chaîne de montage réalise l'assemblage du dispositif de pulvérisation sur un réservoir contenant un produit fluide. Avantageusement, cette machine comporte un support 11 adapté à recevoir une pluralité de dispositifs de pulvérisation assemblés 20, par exemple quatre exemplaires, et ledit support 11 est déplaçable automatiquement par rapport au système d'actionnement 12 de la machine pour amener successivement les dispositifs de pulvérisation à tester dans ledit système d'actionnement. Ce support peut être d'une forme quelconque, par exemple circulaire et rotatif, ou rectiligne et déplaçable en translation. Avantageusement, un support 11 rotatif peut être associé à une piste rectiligne 13 adaptée à supporter un plus grand nombre de dispositifs, par exemple seize, comme représenté sur la figure 1. Le système d'actionnement 12comporte avantageusement une partie supérieure 121 et une partie inférieure 122 qui sont déplaçables, notamment en translation, l'une par rapport à l'autre. Ce déplacement permet de réaliser l'actionnement du dispositif de pulvérisation lorsqu'il est assemblé sur le réservoir contenant de l'eau, pour ainsi créer un spray à partir de cette eau contenue dans le réservoir. Avantageusement, la partie inférieure 122 qui peut être formée par une plaque, coopère avec le réservoir, et ladite partie supérieure 121 coopère avec la tête de distribution. Avantageusement, la partie supérieure est également formée par une plaque pourvue d'un orifice à travers lequel la tête de pulvérisation va passer. En variante, le système d'actionnement peut aussi être adapté pour actionner des dispositifs de pulvérisation à actionnement latéral, ou pour actionner d'autres types de dispositifs de distribution de produit fluide, tels que des inhalateurs de poudre sèche (DPI). Lorsque le système d'actionnement est actionné, un spray est généré et des moyens de détermination, de préférence programmables, sont utilisés pour déterminer un ou plusieurs paramètre(s) dudit spray. Comme déjà évoqué précédemment, ces moyens de détermination peuvent comporter un dispositif laser 14 adapté à créer un rayon ou faisceau laser qui va traverser ledit spray et former une tranche de spray, et une caméra vidéo 15 adaptée à visualiser ladite tranche de spray. Avantageusement, ladite caméra vidéo 15 affiche au moins 100 images par seconde, avantageusement au moins 500 images par seconde. Des moyens de confinement de spray (non représentés) sont avantageusement prévus pour contenir et recevoir le spray généré à chaque actionnement. Ces moyens de confinement comportent de préférence une enceinte qui entoure la totalité de la machine et une cheminée associée à des moyens de génération de vide. Cette cheminée peut être disposée au-dessus et/ou sur le coté du dispositif de pulvérisation actionné par la machine. Ainsi, le spray lorsqu'il est généré par le système d'actionnement va être directement aspiré dans ladite cheminée pour ne pas souiller le restant de la machine.

Le logiciel est adapté à déterminer rapidement les paramètres réels et à les comparer avec les paramètres pré-établis pour donner rapidement le résultat du contrôle. Typiquement, pour chaque dispositif de pulvérisation à tester, un cycle d'environ 2 minutes permet d'effectuer les contrôles requis. Avec une machine à supports multiples telle que représentée et décrite précédemment, une analyse significative peut être réalisée en un temps relativement court de sorte que ces tests peuvent être réalisés de manière répétée le long de la chaîne de montage afin de contrôler quasiment en continu ladite chaîne de montage.

L'ordinateur associé à la machine et au logiciel utilisé présente avantageusement une interface simplifiée par laquelle l'utilisateur peut programmer les paramètres à analyser, et programmer également les moyens de détermination. Avantageusement, divers paramètres sont préprogrammés en fonction du type de dispositif de pulvérisation assemblé par la chaîne de montage, de sorte que la machine peut être utilisée avec plusieurs chaînes de montage, pour plusieurs types de dispositifs de pulvérisation différents.

Diverses modifications sont possibles sans sortir du cadre de la présente invention tel que défini par les revendications annexées.

## Revendications

1. Machine (10) de contrôle de spray pour chaîne de montage de dispositif de pulvérisation de produit fluide (20), **caractérisée en ce qu'**elle comporte un support (11) recevant au moins un dispositif de pulvérisation de produit fluide (20) prélevé directement sur la chaîne de montage, un système d'actionnement (12) pour actionner un dispositif de pulvérisation de produit fluide (20) dudit support (11) et créer un spray de produit fluide, des moyens de détermination (14, 15) pour déterminer des paramètres réels dudit spray créé par ledit système d'actionnement, et des moyens d'analyse desdits paramètres réels, lesdits moyens d'analyse comparant lesdits paramètres réels avec des paramètres prédéterminés, lesdits moyens d'analyse déterminant des paramètres de forme géométrique de spray et/ou de tailles de particules et/ou de densité de particules et/ou de distribution de tailles de particules et/ou de vitesse de particules.

2. Machine selon la revendication 1, dans laquelle ledit support (11 ) reçoit une pluralité de dispositifs de pulvérisation de produit fluide (20), ledit support (11) étant déplaçable par rapport audit système d'actionnement (12) pour amener successivement lesdits dispositifs de pulvérisation de produit fluide dans ledit système d'actionnement.

3. Machine selon la revendication 1 ou 2, dans laquelle lesdits moyens de détermination comportent un dispositif laser (14) adapté à traverser ledit spray pour former une tranche de spray et une caméra vidéo (15) pour visualiser ladite tranche de spray.

4. Machine selon l'une quelconque des revendications précédentes, dans laquelle ledit système d'actionnement comporte une partie supérieure (121) et une partie inférieure (122) déplaçables l'une par rapport à l'autre pour réaliser l'actionnement du dispositif de pulvérisation de produit fluide (20) et ainsi créer un spray.

5. Machine selon la revendication 4, dans laquelle ladite partie inférieure (122) coopère avec un réservoir et ladite partie supérieure (121) coopère avec une tête de distribution dudit dispositif de pulvérisation de produit fluide.

6. Machine selon l'une quelconque des revendications précédentes, dans laquelle lesdits moyens de détermination sont programmables.

7. Machine selon la revendication 3, dans laquelle ladite caméra vidéo (15) affiche au moins 100 images par seconde, avantageusement au moins 500 images par seconde.

8. Machine selon l'une quelconque des revendications précédentes, dans laquelle des moyens de confinement de spray sont prévus pour recevoir le spray généré à chaque actionnement.

9. Machine selon la revendication 8, dans laquelle lesdits moyens de confinement comportent une enceinte et une cheminée associée à des moyens de génération de vide, ladite cheminée étant disposée au-dessus et/ou sur le coté du dispositif de pulvérisation actionné par la machine.

10. Procédé de contrôle de spray pour chaîne de montage de dispositif de pulvérisation de produit fluide (20), **caractérisé en ce qu'**il comporte les étapes suivantes : prélever au moins un dispositif de pulvérisation assemblé (20) directement de ladite chaîne de montage, installer ledit au moins un dispositif de pulvérisation prélevé sur un support (11), utiliser un système d'actionnement (12) pour actionner ledit dispositif de pulvérisation prélevé (20) et ainsi générer un spray, déterminer des paramètres réels dudit spray généré, et comparer lesdits paramètres réels avec des paramètres prédéterminés, lesdits paramètres réels comprenant la forme géométrique de spray et/ou les tailles de particules et/ou les densités de particules et/ou les distributions de tailles de particules et/ou les vitesses de particules.

11. Procédé selon la revendication 10, dans lequel après l'étape de prélever au moins un dispositif de pulvérisation assemblé de la chaîne de montage et avant l'étape d'installer le dispositif de pulvérisation prélevé sur le support, ledit dispositif de pulvérisation est fixé sur un réservoir contenant un produit fluide à pulvériser.

12. Procédé selon la revendication 11, dans lequel ledit produit fluide à pulvériser est de l'eau, de l'alcool ou un mélange d'eau et d'alcool.

13. Procédé selon l'une quelconque des revendications 10 à 12, dans lequel l'étape de déterminer des paramètres réels du spray généré est réalisée avec un dispositif laser (14) adapté à former une tranche de spray et une caméra vidéo (15) adaptée à visualiser ladite tranche de spray.

14. Procédé selon la revendication 13, dans lequel l'étape de déterminer des paramètres réels du spray généré comprend de déterminer avec un logiciel et à partir de ladite tranche de spray visualisée des paramètres de forme géométrique de spray et/ou des paramètres de taille de particules et/ou des paramètres de densité de particules et/ou des paramètres de distribution de tailles de particules et/ou des paramètres de vitesse de particules.
